# EUROPEAN PATENT APPLICATION

(11) **EP 3 117 701 A1**
(43) Date of publication of application: **18.01.2017**
(21) Application number: 15176467.7
(22) Date of filing: 13.07.2015
(51) Int. Cl.: A01G 7/04

(54) **USING TELEVISION TO STIMULATE PLANT GROWTH**

(71) Applicant: Vestel Elektronik Sanayi ve Ticaret A.S., 45030 Manisa (TR)
(72) Inventor: Salt, Metin, Maslak-Istanbul (TR)
(74) Representative: Ascherl, Andreas

(57) **Abstract**

The invention relates to a method of stimulating plant growth, to a computer program, to a machine-readable storage unit and to the use of the method in at least one of domestic applications, such as in houses and/or in offices for growing a plant and/or for growing a plant propagule, in applications of generating light patterns configured for ambient light and/or for security light and in applications of industrial plant growing, such as in professional greenhouses. The method comprises the steps: a) obtaining (501) a plant and/or a plant propagule; b) utilizing (502) a television comprising a light source for illuminating the plant and/or the plant propagule when the television is switched on; and c) illuminating (503) a growth area of the plant and/or the plant propagule with the light emitted from the light source, wherein the light comprises a plurality of light components that are dynamically varied according to a predetermined criterion. In this way, plant growth is stimulated while keeping investment costs as low as possible, the method is easy to use while at the same time has a wide usage range.

## Description

### FIELD OF THE INVENTION

The invention relates to a method of stimulating plant growth, to a computer program and to a machine-readable storage unit. Further, the invention relates to the use of the method in at least one of domestic applications, such as in houses and/or in offices for growing a plant and/or for growing a plant propagule, in applications of generating light patterns configured for ambient light and/or for security light and in applications of industrial plant growing, such as in professional greenhouses.

### BACKGROUND OF THE INVENTION

During their growth, plants may need light with specific wavelength(s) at certain times of a day. During natural growth, for instance in case of outdoor plants, this need is provided by sunlight, since natural sunlight comprises light beams with different wavelengths. Therefore, plants receive adequate light beams with required wavelength(s) whenever they need. On the other hand, specific light sources are required for indoor plant growth operation to meet specific light needs of the plants.

Television (TV) sets traditionally used for receiving TV broadcasting signals convert these signals to actual images on the TV screen in the form of visible light points called pixels. TV sets, which in the following correspond to TV receiver sets, are becoming increasingly software-controlled devices which in turn lets them run intelligent software programs, such as for responding user commands under complicated user interfaces, for connecting Internet, for accessing remote servers, for instance in a database or in a portal, and for running applications developed by third party developers.

It is known that light directly affects the health and growth of plants. Photosynthesis is a process used by plants to convert light energy, normally from the sun, into chemical energy that enables plants to carry out all of its biological activities. There are three fundamental attributes of light causing photosynthesis: duration, intensity and frequency. Light duration is characterized by the cycles of light hours and dark hours in a 24-hour-period. Light intensity is the amount of light projected on the plant. And, finally, light frequency is the frequency of electromagnetic radiation. Plants respond differently to duration, direction, intensity and frequency of light. The health and growth of plants can be altered by controlling these attributes of light on a plant or on a plant propagule, such as on seeds, spores, cuttings, bulbs, corns and rhizomes.

Artificial lighting is an extra investment for hobbyist pot plant growers. The investment costs are increasingly high as the intelligent parts controlling the light attributes are added to the overall system. Further, such systems usually require extra electric power cabling, data line cabling, computer access and installment of all.

US 4,196,544 describes a sophisticated so-called growth chamber. In a chamber for cultivating plant growth, light fixtures are employed, each containing a high intensity discharge lamp. The bulb of the lamp serves as an inner transparent wall and a globe functions as an outer transparent wall. In the space between the bulb and globe, water is caused to flow in order to remove unwanted radiation and heat generated by each lamp before the radiation is transmitted into the growth chamber. Growth chambers require high investments and complex settings and are not practical at all for domestic usage.

US 2013/0298459 A1 describes the application of spectrum-controlled artificial light to promote the growth of plants and a system for automating the crop associated selection of spectrally-controlled agricultural lighting programs.

In general, plant hobbyists have limited funds to invest, limited space in homes and limited technical knowledge to operate complex devices. Most domestic houses are not designed to grow plants in terms of space and light requirements. The lack of space limits the size of growth stimulating devices, such as growth chambers or greenhouses. These systems are not only big for domestic home but also not cost efficient for a hobbyist. It is somewhat cumbersome for households to set up the system with data and electric cabling as in case of plant lights on top of each pot. Further, the house plants growing in pots usually come in a variety in different parts of the world, each one requiring different light adjustments and operations for optimal healthy growth. However, for a hobbyist, the existing apparatus and methods capable of supporting multiple plant types are either expensive or so simple that they have only limited use because they are incapable of dynamically programming to match the requirements.

### SUMMARY OF THE INVENTION

It is the object of the invention to provide a possibility of stimulating plant growth while keeping investment costs as low as possible, which is easy to use while at the same time has a wide usage range.

This object is achieved by the subject matter of the independent claims. Preferred embodiments are defined in the sub claims.

According to a first aspect of the invention, this object is achieved by a method of stimulating plant growth comprising the steps: a) obtaining a plant and/or a plant propagule; b) utilizing a television comprising a light source for illuminating the plant and/or the plant propagule when the television is switched on; and c) illuminating a growth area of the plant and/or the plant propagule with the light emitted from the light source, wherein the light comprises a plurality of light components that are dynamically varied according to a predetermined criterion.

In this way, a possibility is provided to stimulate plant growth by illuminating plants and/or plant propagules using dynamically varying light components, such as intensity, color and duration. These light components are preferably produced by an internet-connected television set, which is preferably arranged in the same room as the plant or the plant propagule and an Internet information server from which the television set fetches plant growing information dynamically. The television is preferably a smart television, a smart display or a computer monitor. Preferably, the light source comprises a plurality of light emitting diodes.

It is an idea of the invention to use the photosynthesis effect of light on plant growth and a TV set as an intelligently-controlled artificial light source to stimulate and promote plant growth. With the invention, the plant hobbyists who take care of their variety of plants cultivated in pots in their homes have a cheap and simple possibility that helps growing healthy pot plants. The invention provides an easy-to-use and non-installation possibility and, further, no extra apparatus for promoting healthy plant growing is required. In addition, different types of plants require slightly or moderately different ways to take care, such as variant illumination on the plant. Hence, the plant hobbyist gets guidance to take care of possessed plants in variant phases of growth as well as in different seasons of the year. The inventive idea is based on the fact to utilize a television that is already in a vast majority of houses and easy to use, already installed and practically free since it is purchased for another purpose, such as for entertainment. Preferably, the television is connected to the Internet which would allow guidance in plant growing and automatically programming of lighting.

According to a preferred embodiment of the invention, the method comprises the step of controlling the television such that a plurality of parameters characteristic for plant growth is selected. The step of controlling is preferably repeated when a plurality of plants and/or a plurality of plant propagules is/are provided. Hence, all plants and/or all plant propagules in a room or in an apartment are included. The television is preferably connected to Internet via an Internet information server and/or is preferably connected to a database and the predetermined criterion is preferably satisfied such that the plurality of parameters are tracked and updated when required. In this way, a possibility is provided to track and to store parameters in order to control the television as an artificial illumination source for promoting plant growth. The plurality of parameters preferably comprise date, time, growing phase, type, size and age of the plant and/or of the plant propagule and/or distance and location of the plant and/or of the plant propagule relative to the television. When using these parameters an optimum control of the illumination of the growth area is achieved.

According to a preferred embodiment of the invention, the predetermined criterion comprises a predefined range of a plant growing information parameter characteristic for the plant and/or for the plant propagule. After the plant growing information parameter is selected, it may become adjusted to be in a predefined range in order to satisfy the predetermined criterion. Once the predetermined criterion is fulfilled, the illumination preferably remains constant for a predetermined time period.

According to a preferred embodiment of the invention, the dynamical variation of the plurality of light components corresponds to controlling at least one light component out of the plurality of light components comprising light duration, light intensity, on-off time, light color and/or light frequency. Preferably, the method further comprises the step of determining a maximum light intensity and setting it as common light intensity for the plant and/or for the plant propagule. Preferably, the method further comprises the step of determining a maximum light duration and setting it as common light duration for the plant and/or for the plant propagule. Preferably, the method further comprises the step of determining a common light color for the plant and/or for the plant propagule and setting the common light color in a predefined time slot during the step of illuminating and/or during the step of controlling. In this way, a common light color is selectable and used in the illuminating step and/or in the controlling step.

The inventive idea is also applicable on hardware and on systems comprising hardware and software components. The television preferably comprises a plurality of light sources with different colors, such as red, green and blue light sources, in order to display at least one image or a series of images, such as a video; means for receiving at least one user input comprising information, such as plant information, about at least one plant to be grown; at least one controller unit, which controls the plurality of light sources according to the received user input.

According to a preferred embodiment of the invention, a user inputs information about the plant to be grown. The user preferably uses a remote controller or a keyboard for inputting the information. The information preferably comprises type of the plant, location and the distance of the plant with respect to the television or size or age of the plant. When the user inputs the information, the controller preferably adjusts on-off time, intensity, color and/or duration of the pixels according to the input information.

According to a preferred embodiment of the invention, the television comprises a memory comprising control information related to the plant information. The control information preferably comprises light information, such as light color, light intensity and light schedule, for different plants. The memory is preferably in connection with the controller. In this preferred embodiment, when a user inputs the plant information, the controller controls the pixels according to control information related to the plant information. In this preferred embodiment, since different plant information and respective control information is stored in the memory, different plants are able to be grown using the television. In this preferred embodiment, content of the memory is updated online or offline. During online update, the television preferably connects to a remote server via the Internet or an intranet. During offline update, the user preferably uses a memory device, such as a USB memory, comprising the update data.

According to a preferred embodiment of the invention, the television comprises means for connecting to the Internet. In this preferred embodiment, the television connects to a remote server which comprises a database having control information related to the plant information. In this preferred embodiment, when a user inputs the plant information, the television connects to the remote server via the means and receives control information corresponding to the input plant information via the means. According to the received control information, the controller adjusts on-off time, intensity, color and/or duration of the pixels.

In a preferred embodiment of the invention, the means for receiving at least one user input and the controller are in connection with a user interface. In this preferred embodiment, the user interface is a part of an application. In this preferred embodiment, the television is capable of running applications which are able to be used for growing plants without changing any hardware.

In a preferred embodiment of the invention, a user inputs information about at least two plants to be grown. In this preferred embodiment, when the user inputs the information about at least two plants, at least two control information parameter, each control information parameter corresponding to one plant, are fetched from the memory or from the remote server. When the control information is fetched, the controller preferably generates individual schedules for the plants and this information is input. Then, the controller preferably identifies light ON status for all plant schedules and compares the light colors of ON slots. If the same light color is active on the ON slot, the common color is preferably set for the ON slot. If same light color is not active on the ON slot, different colors are preferably combined and a combination color is preferably set for the ON slot. For example, if for an ON slot a first plant requires blue color and a second plant requires red color, magenta color is set for the ON slot. When all ON slot colors are set, for ON slots, intensities of the most intense lights are preferably determined and determined intensities are preferably set for intensities of corresponding ON slots. Then, a final schedule is preferably generated by determining a longest duration of the ON slot and setting the longest duration as common duration.

According to a preferred embodiment of the invention, a color of the pixel is adjusted by controlling the levels of the light sources at corresponding pixels. For example, by adjusting the levels of red, green and blue light sources, different colors are able to be generated. Similarly, in order to adjust the intensity, backlight of the television is adjusted. For example for higher intensities, backlight intensity of the television is increased.

According to a preferred embodiment of the invention, by controlling the pixel light color, intensities and duration of the television, the television is able to be used for growing a plant. Therefore, plant hobbyists do not need to buy expensive light setups and do not need to use a whole chamber for growing plants.

According to a second aspect of the invention, the above object is achieved by a computer program, loadable or loaded in a memory of a computer with orders readable by the computer for performing the method according to the first aspect of the invention, when the orders are performed on the computer.

According to a third aspect of the invention, the above object is achieved by a machine-readable storage unit, on which a computer program according to the second aspect of the invention is stored.

According to a fourth aspect of the invention, the above object is achieved by the use of a method according to the first aspect of the invention in at least one of domestic applications, such as in houses and/or in offices for growing a plant and/or for growing a plant propagule, in applications of generating light patterns configured for ambient light and/or for security light and in applications of industrial plant-growing, such as in professional greenhouses.

### BRIEF DESCRIPTION OF THE DRAWINGS

These and other aspects of the invention will be apparent from and elucidated with reference to the embodiments described hereinafter which should be considered as examples of the invention without limiting the scope of the invention.

In the drawings:
- Fig. 1: exemplary shows a typical living room of a plant hobbyist according to a first preferred embodiment of the invention;
- Fig. 2: schematically illustrates the steps of a method to determine an illumination schedule for multiple plants according to a second preferred embodiment of the invention;
- Fig. 3: schematically illustrates the steps of a method for determining an illumination schedule for multiple plants according to a third preferred embodiment of the invention;
- Fig. 4: shows a smart television application according to a fourth preferred embodiment of the invention; and
- Fig. 5: schematically illustrates the steps of a method of stimulating plant growth according to a fifth preferred embodiment of the invention.

### DETAILED DESCRIPTION OF EMBODIMENTS

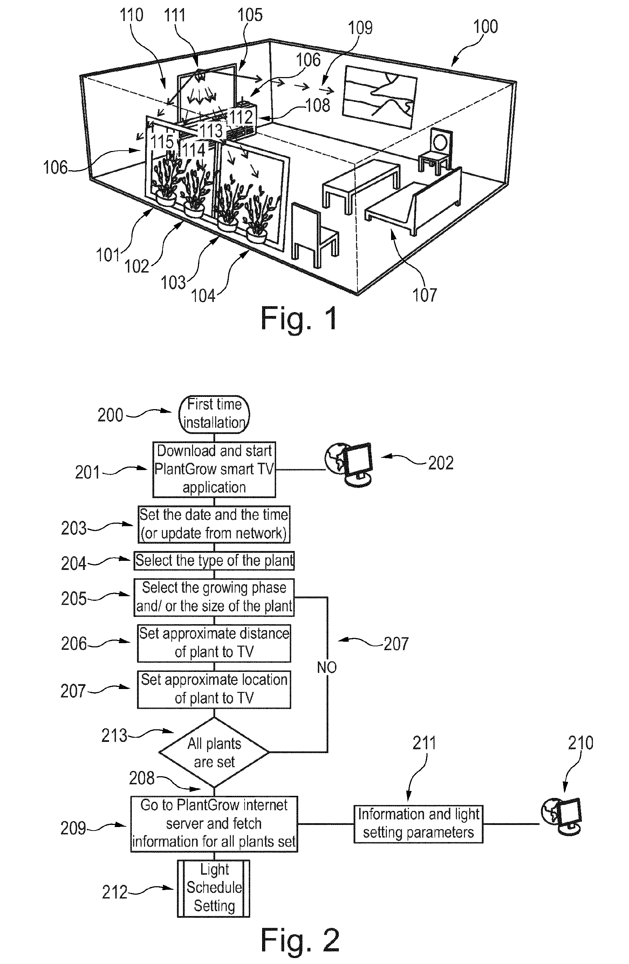

Fig. 1 shows a typical living room 100 of a plant hobbyist according to a first preferred embodiment of the invention. The living room 100 is furnished with a minimum of one sofa 107, different pots of indoor plants 101, 102, 103, 104 are arranged at a window 106 of the room to expose the plants to sunshine as much as possible. A television set 105 and an Internet connection modem 106 on a TV stand 108 is placed across the room for comfortable viewing from the sofa 107. The light from the TV set 105 illuminates the room directly across and also from sideways 109, 110 due to a large viewing angle 111 of the TV set 105. Therefore, light rays 112, 113, 114, 115 fall on the plants 101, 102, 103, 104. The software in the TV set 105 creates light on the plants dynamically varying its on-off time, intensity, color and duration. In this first preferred embodiment, the TV set 105 is capable of replicating intelligent real life or animation picture frames on a screen created or recorded at another time and location. Hence, it is even easier to create light patterns with the TV set 105. Light patterns of the TV set 105 as an artificial light source are utilized to supply growing light to promote growth of household plants.

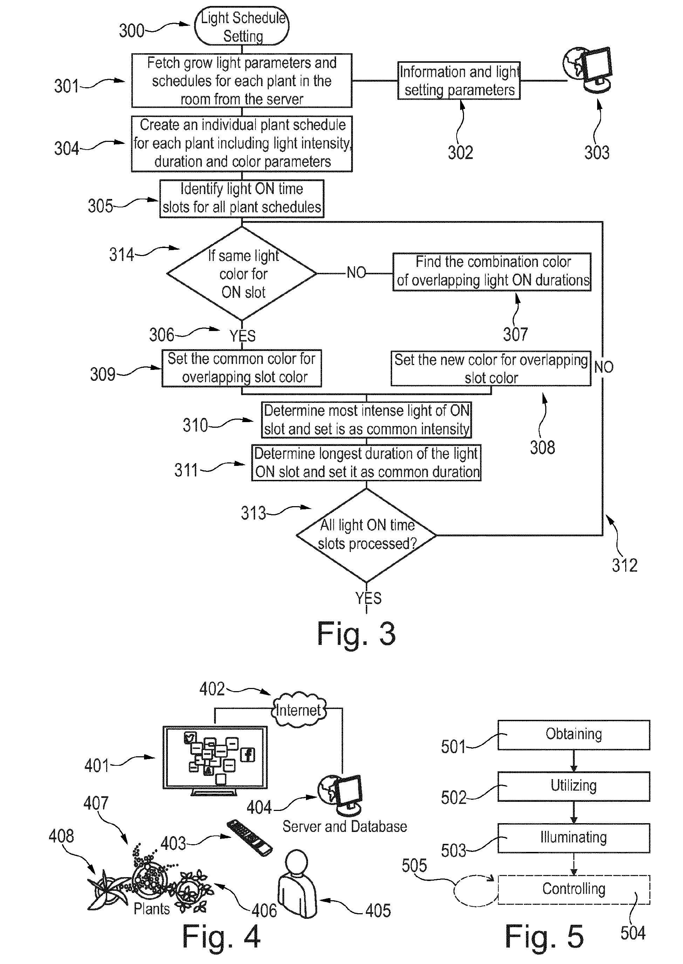

Fig. 2 and Fig. 3 schematically illustrate the steps of a method to determine an illuminating schedule for multiple plants in the same room according to a second and to a third preferred embodiment of the invention. In both figures, inner workings of an internet-connected smart television set software application is shown, wherein the smart TV set has a connection to an Internet server 202, 303 to determine an optimum illuminating schedule for multiple plants with the TV set.

The smart TV set application is first time installed 200 and a smart TV application is downloaded and started 201 via a connection to an Internet server 202 that contains all the updated lighting needs of most indoor plants that could be cultivated in homes. Then, the date and the time are set or updated 203 from the network. Thereafter, the type of the plant is selected 204 and the growing phase and/or the size and/or the age of the plant are selected 205. Further, the approximate relative distance of the plant and the location of the plant to the television are set 206, 207 and this is repeated 207 until all plants are set 213.

After all plants are set 213, the method continues 208 to go to the Internet server to launch the information for all plant sets 209. The application has a visual user interface to a user of the application via remote control and the screen of the TV set. The application allows the user to select his/her plants out of a plant database provided by the Internet server 202. The application also lets the user to define the location and the distance of the plants relative to the TV set in the same room according to the second and third preferred embodiment. The smart TV set application is capable of internally updating and tracking actual date and time once it is set. The information and light setting parameters 211 are adjusted and updated from a database 210 so that a light schedule setting 212 adequate to satisfy the requirements is finally achieved.

The smart TV set application software gathers location, distance and types of the plants in the room from the user and fetches plant specific lighting needs, such as schedules of light ON and light OFF time slots, intensity of the light in each ON time slot and color of the light in each ON time slot. Then, an overall schedule for all plants in the room including intensity and combined color for each time slot are calculated.

Fig. 3 shows a light schedule setting 300 that has been adjusted, wherein the information and light setting parameters 302 are fetched from an Internet server 303 so that a number of grow light parameters and schedules for each plant in the room from the server is fetched 301. An individual plant schedule for each plant including light intensity, duration and color parameters is created 304 and light ON time slots for all plant schedules are identified 305. Once all settings and calculations are done, the application starts executing the TV set. The application software turns on the TV set screen when an ON time slot in the overall schedule is selected or adjusted. The intensity of the light in the TV set is set 310 by adjusting backlighting of the TV set or using specific functions to define and set intensity in other TV set technologies. Further, the maximum light duration is also determined and set 311.

The application also sets combined color that is calculated for the ON slot in the schedule 306, 307, 308, 309, 312, 314. A light ON status for all plant schedules is identified and the light colors of ON slots are compared. If the same light color is active on the ON slot, the common color is set for the ON slot. If same light color is not active on the ON slot, different colors are preferably combined and a combination color is preferably set for the ON slot. When all ON slot colors are set, for ON slots, intensities of the most intense lights are determined and determined intensities are set for intensities of corresponding ON slots. Then, a final schedule is generated by determining a longest duration of the ON slot and setting the longest duration as common duration. The application keeps the television set screen ON with these parameters until the ON slot ends in the schedule 313. The application then commands the TV set to go to standby mode until the next ON slot.

According to other preferred embodiments of the invention, the plant-growing light illuminating functionality and television viewing functionality of a given TV set might be overlapped based on user demands. In that case, the application is instructed to let one or the other functionality to take place.

Fig. 2 und Fig. 3 are embodied in a software that executes in a TV set main processor. Modern TV sets are capable of running software and output to their screens and interacting with the user via their remote control devices as desktop or laptop computing devices run software and output to their screens and interact with the user via a keyboard and/or a mouse. As in the case of internet-connected computing devices, TV sets can be connected to Internet and exchange information with remote Internet servers as well as download software that executes on their processor. In most smart TV sets this software is called software TV application.

Fig. 4 shows a smart TV application according to a fourth preferred embodiment of the invention. A TV set 401 resides in the same room with a number of plants 406, 407, 408, internet-connection 402 to the TV set 401 and an Internet server 404 that is keeping plant lighting key parameters for a number of plants in an organized manner, such as in a database 404. The TV set 401 is used via a TV remote control 403 by a user 405 of the TV set 401.

Fig. 5 schematically illustrates the steps of a method according to a fifth preferred embodiment of the invention. In a first step, a plurality of plants and a plurality of plant propagules are obtained 501. In a second step, a smart TV set is utilized 502. The light source included in the TV set comprises a plurality of light emitting diodes and illuminates 503 a growth area of the plurality of plants and the plurality of plant propagules. In a fourth step, the TV is controlled 504 such that a plurality of parameters that are characteristic for plant growth is selected. This step is repeated 505 until all plants and all plant propagules are included. The method utilizes a TV set as artificial growth light source in favor of plant species. The smart TV software application controls ON and OFF times, intensity and light color generated by the TV set that is run in the TV set processor. The illustrated method is enhanced with the help of regularly updated information from Internet. A database and a web server are established to organize, update and provide information about plant species to television sets. Since the illustrated method uses TV sets that are already in vast majority of houses, it is easy to use, already installed and practically free since the TV is purchased for entertainment purposes.

As explained above, the invention relates to a method of stimulating plant growth, to a computer program, to a machine-readable storage unit and to the use of the method in at least one of domestic applications, such as in houses and/or in offices for growing a plant and/or for growing a plant propagule, in applications of generating light patterns configured for ambient light and/or for security light and in applications of industrial plant growing, such as in professional greenhouses. The method comprises the steps: a) obtaining 501 a plant and/or a plant propagule; b) utilizing 502 a television comprising a light source for illuminating the plant and/or the plant propagule when the television is switched on; and c) illuminating 503 a growth area of the plant and/or the plant propagule with the light emitted from the light source, wherein the light comprises a plurality of light components that are dynamically varied according to a predetermined criterion. In this way, plant growth is stimulated while keeping investment costs as low as possible, the method is easy to use while at the same time has a wide usage range.

## Claims

1. A method of stimulating plant growth comprising the steps:
a) obtaining (501) a plant and/or a plant propagule;
b) utilizing (502) a television comprising a light source for illuminating the plant and/or the plant propagule when the television is switched on; and
c) illuminating (503) a growth area of the plant and/or the plant propagule with the light emitted from the light source, wherein the light comprises a plurality of light components that are dynamically varied according to at least one predetermined criterion.

2. The method according to claim 1, further comprising controlling (504) the television such that a plurality of parameters characteristic for plant growth is selected.

3. The method according to claim 2, wherein the step of controlling (504) is repeated (505) when a plurality of plants and/or a plurality of plant propagules is/are provided.

4. The method according to one of claims 2 and 3, wherein the television is connected to Internet via an Internet information server (202, 303, 404) and/or is connected to a database (210, 404) and the predetermined criterion is satisfied such that the plurality of parameters are tracked and updated when required.

5. The method according to one of claims 2 to 5, wherein the plurality of parameters comprise date, time, growing phase, type, size and age of the plant and/or of the plant propagule and/or distance and location of the plant and/or of the plant propagule relative to the television.

6. The method according to one of the preceding claims, wherein the predetermined criterion comprises a predefined range of a plant growing information parameter characteristic for the plant and/or for the plant propagule.

7. The method according to one of the preceding claims, wherein the dynamical variation of the plurality of light components corresponds to controlling at least one light component out of the of plurality of light components comprising light duration, light intensity, on-off time, light color and/or light frequency.

8. The method according to claim 7, further comprising determining (310) a maximum light intensity and setting it as common light intensity for the plant and/or for the plant propagule.

9. The method according to one of claims 7 and 8, further comprising determining (311) a maximum light duration and setting it as common light duration for the plant and/or for the plant propagule.

10. The method according to one of claims 7 to 9, further comprising determining (309) a common light color for the plant and/or for the plant propagule and setting the common light color in a predefined time slot during the step of illuminating (503) and/or during the step of controlling (504).

11. A computer program, loadable or loaded in a memory of a computer with orders readable by the computer for performing the method according to one of the preceding claims, when the orders are performed on the computer.

12. A machine-readable storage unit, on which a computer program according to the preceding claim is stored.

13. Use of a method according to one of claims 1 to 10 in at least one of domestic applications, such as in houses and/or in offices for growing a plant and/or for growing a plant propagule, in applications of generating light patterns configured for ambient light and/or for security light and in applications of industrial plant growing, such as in professional greenhouses.
